# EUROPÄISCHE PATENTANMELDUNG

(11) **EP 2 206 615 A1**
(43) Veröffentlichungstag der Anmeldung: **14.07.2010**
(21) Anmeldenummer: 09013979.1
(22) Anmeldetag: 06.11.2009
(51) Int. Cl.: B60C 27/14, B60C 27/10

(54) **Gleitschutzvorrichtung mit Felgenanbindung**

(30) Priorität: 13.01.2009 DE 102009004805
(71) Anmelder: RUD Ketten Rieger & Dietz GmbH u. Co. KG, 73432 Aalen (DE)
(72) Erfinder: Rieger, Hansjörg, 73431 Aalen (DE); Grimm, Anton, 73479 Ellwangen (DE)
(74) Vertreter: Grünecker, Kinkeldey, Stockmair & Schwanhäusser Anwaltssozietät

(57) **Zusammenfassung**

Die Erfindung betrifft eine Befestigungsvorrichtung (14) zur Befestigung einer mit Haltearmen (9) versehenen Gleitschutzvorrichtung (6) für Fahrzeugräder (1), mit einem mit dem Fahrzeugrad (1) verbindbaren Befestigungsorgan (5), das durch einen im Wesentlichen quer zu einer Radachse (A) verlaufenden Ausleger (16) mit einem mit den Haltearmen (9) verbindbaren Kupplungsorgan (15) verbunden ist. Des Weiteren betrifft die Erfindung eine Gleitschutzvorrichtung (6) für Fahrzeugräder (1), die eine Halteeinrichtung (7) mit speichenförmig angeordneten Haltearmen (9) und eine Befestigungsvorrichtung (14) der oben genannten Art umfasst. Um mit einfachsten Mitteln eine einfach zu montierende Befestigungsvorrichtung zu schaffen, umfasst der Ausleger (16) ein Führungsorgan (16a), durch das er in wenigstens eine Verschieberichtung (V) verschiebbar und um wenigstens eine im Wesentlichen parallel zur Radachse (A) verlaufende Rotationsachse (R) relativ zum Befestigungsorgan (5) drehbar geführt ist.

## Beschreibung

Die Erfindung betrifft eine Befestigung einer Gleitschutzvorrichtung für Fahrzeugräder, mit einem am Fahrzeugrad befestigbaren Befestigungsorgan, das durch einen im Wesentlichen in einer quer zu einer Radachse verlaufenden Ebene liegenden Ausleger mit einem Kupplungsorgan verbunden ist. Des Weiteren betrifft die Erfindung eine Gleitschutzvorrichtung für Fahrzeugräder, die eine Halteeinrichtung mit wenigstens einem Halter und eine Befestigungsvorrichtung umfasst, wobei die Befestigungsvorrichtung ein am Fahrzeugrad befestigbares Befestigungsorgan aufweist, das durch einen im Wesentlichen quer zu einer Radachse verlaufenden Ausleger mit einem mit dem Halter verbindbaren Kupplungsorgan verbunden ist.

Aus der EP 0 376 426 A1 ist eine Gleitschutzvorrichtung der vorstehenden Art bekannt, deren Befestigungsorgan an einer speziell ausgestalteten Radschraube befestigt ist. Um die Halteeinrichtung der Gleitschutzvorrichtung federnd gegen die Flanke des Reifens des Fahrzeugrades zu drücken, ist eine zentrale Spannfeder vorgesehen, die drehbar in dem Ausleger gelagert ist. Die Gleitschutzvorrichtung besitzt eine zentrale Halterung für vier in der Halterung um begrenzte Beträge hin und her verschiebbare Haltearme. Durch die Verschiebbarkeit der Haltearme ist eine geringfügige Anpassung der Position der Haltearme an unterschiedliche Raddurchmesser oder unterschiedliche Positionen des Laufnetzes möglich.

Eine ähnliche Gleitschutzvorrichtung, bei der die Position der Spannfeder nach der Montage der Gleitschutzvorrichtung durch ein Arretierungselement fixiert werden kann, zeigt die EP 0 376 427 A1. In den Figuren 3 bis 7 sind außerdem verschiedene Ausführungsformen von Befestigungsorganen und von mit diesen Befestigungsorganen verbindbar ausgestalteten Radmuttern gezeigt.

Die EP 0 376 428 A1 beschreibt eine Gleitschutzvorrichtung, bei der die Haltearme gelenkig mit einer am Fahrzeugrad drehbar befestigbaren Halterung verbunden sind. Die Halterung ist durch eine aus gummielastischem Kunststoff geformte Spannfeder mit dem Ausleger verbunden. Die Spannfeder und das Befestigungsorgan sind drehbar mit dem Ausleger verbunden, wobei die Spannfeder in einer mit Lagerschalen versehenen Aussparung eingesetzt ist. Der Abstand der Drehachsen von Befestigungsorgan und Spannfeder ist durch den Abstand der entsprechenden Aufnahmebohrungen in dem Ausleger vorgegeben und kann nicht variiert werden.

In der WO 2008/029424 A1 ist eine Gleitschutzvorrichtung gezeigt, bei der zur Montage eine mit Haltearmen verbundene Halterung durch einen Seilzug mit dem Fahrzeugrad verspannt wird. Um den Seilzug am Fahrzeugrad zu befestigen, ist ein einteiliges Befestigungselement vorgesehen, das ein an einer Radschraube befestigbares Klemmorgan und einen mit dem Seilzug verbundenen Ausleger umfasst.

Befestigungsvorrichtungen, bei denen der Abstand zwischen Kupplungsorgan und Befestigungsorgan entlang einer Längsachse des Auslegers verändert werden kann, zeigen die WO 2004/039611 A1 und die EP 1 604 843 B1. Das Kupplungsorgan umfasst ein U-förmig gebogenes Halteblech, dessen parallel zueinander verlaufenden Enden mit Öffnungen zur Aufnahme eines stangenförmigen Auslegers versehen sind. Das Befestigungsorgan ist auf diese Weise verschiebbar auf dem Ausleger gelagert.

Ein Nachteil der aus dem Stand der Technik bekannten Befestigungsvorrichtungen ist ihr aufwändiger Aufbau und der damit verbundene Montage- und Fertigungsaufwand.

Folglich liegt der Erfindung die Aufgabe zugrunde, mit einfachsten Mitteln eine einfach zu montierende und günstig zu fertigende Befestigungsvorrichtung zu schaffen.

Die Erfindung löst die Aufgabe, indem der Ausleger ein Führungsorgan umfasst, durch das es in wenigstens eine Verschieberichtung verschiebbar und um wenigstens eine im Wesentlichen parallel zur Radachse verlaufende Rotationsachse relativ zum Befestigungsorgan drehbar geführt ist.

Nach der Montage der Befestigungsvorrichtung kann der Ausleger montiert und ausgerichtet werden, indem das Kupplungsorgan durch eine Verschiebung und Drehung des Auslegers in Bezug auf die Radachse zentriert wird. Indem notwendige Ausgleichsbewegungen der Befestigungsvorrichtung bei der Montage und während des Betriebs einer Gleitschutzvorrichtung auf die Verbindung zwischen Befestigungsorgan und Ausleger begrenzt sind, ist auch die Anzahl beweglicher Teile verringert. Der Benutzer muss zur Befestigung des Auslegers an dem zuvor befestigten Befestigungsorgan lediglich den Ausleger greifen. Die Montage und Einstellung einer Gleitschutzvorrichtung ist mit der erfindungsgemäßen Befestigungsvorrichtung folglich deutlich vereinfacht.

Ein weiterer Vorteil der erfindungsgemäßen Befestigungsvorrichtung ist ihr gegenüber herkömmlichen Befestigungsvorrichtungen deutlich kompakterer Aufbau. Die konstruktiv einfach gestaltete gelenkige Verbindung zwischen Ausleger und Befestigungsorgan ermöglicht eine sehr geringe Bauhöhe der Befestigungsvorrichtung. Damit kann der Abstand einer Gleitschutzvorrichtung in Richtung der Radachse verringert werden.

Für eine weitere Vereinfachung der Fertigung und Montage der Befestigungsvorrichtung kann das Führungsorgan von sich in Längsrichtung des Auslegers erstreckenden Führungsflächen des Auslegers gebildet sein, zwischen denen wenigstens abschnittsweise an Gegenflächen des Befestigungsorgans anliegen. Der Ausleger kann einen in Verschieberichtung verlaufenden Schlitz aufweisen, in dem das Befestigungsorgan formschlüssig geführt ist. Der Schlitz kann an seinen in und/oder entgegen der Verschieberichtung weisenden Enden geschlossen sein oder Anschlagflächen aufweisen, die eine vorbestimmte Verschiebestrecke begrenzen.

Um den Aufbau der Befestigungsvorrichtung möglichst kompakt zu gestalten, kann die Rotationsachse der gelenkigen Verbindung in der Verschiebestrecke angeordnet sein.

Das Befestigungsorgan kann mit einer umlaufenden Nut versehen sein, deren Abmessungen an die Abmessungen des Schlitzes angepasst sind, um eine sichere und versatzfreie Führung des Befestigungsorgans an dem Ausleger zu erreichen. Beispielsweise kann der Durchmesser des Befestigungsorgans im Bereich der Nut etwa der Breite des Schlitzes entsprechen. Die Breite der Nut kann etwa der Dicke der an den Schlitz angrenzenden Bereiche des Auslegers entsprechen. Eine derartige umlaufende Nut in dem Befestigungsorgan erlaubt eine Drehung um eine vorbestimmte Achse und gleichzeitig eine Verschiebung in Längsrichtung des Schlitzes, während Kippbewegungen des Befestigungsorgans begrenzt sind.

Gemäß einer weiteren vorteilhaften Ausführungsform der Befestigungsvorrichtung kann der Schlitz an einem seiner Enden in eine Einführöffnung münden, in die das Befestigungsorgan wiederholt einsetzbar ist. Die Einführöffnung kann an dem dem Kupplungsorgan zugewandten Ende oder dem Kupplungsorgan abgewandten Ende des Schlitzes angeordnet sein. Eine derartige Einführöffnung ermöglicht bei der Montage einer Gleitschutzvorrichtung ein einfaches Einlegen des Befestigungsorgans in den Ausleger von Hand, ohne dass Werkzeug benötigt wird.

An dem Kupplungsorgan treten bei montierter Gleitschutzvorrichtung im Betrieb vor allem Zugkräfte auf, die den Ausleger von dem Fahrzeugrad weg ziehen und verformen können. Um die Gefahr einer ungewollten Lösung der Verbindung zwischen Befestigungsorgan und Ausleger zu verringern, beispielsweise durch ein Verrutschen des Befestigungsorgans in Richtung der Einführöffnung, ist die Einführöffnung vorzugsweise an dem dem Kupplungsorgan zugewandten Ende des Schlitzes vorgesehen.

Zur einfachen Montage des Befestigungsorgans kann die Einführöffnung senkrecht zur Rotationsachse des Befestigungsorgans verlaufen, so dass das Befestigungsorgan an der Stelle der Einführöffnung geteilt ist. Vorzugsweise weist die Einführöffnung einen geschlossenen Rand auf, um eine möglichst große Festigkeit des Auslegers zu erreichen. Die Einführöffnung kann beispielsweise von einer Bohrung am Ende des Schlitzes gebildet sein, deren Durchmesser etwas größer als der aufzunehmende Außendurchmesser des Befestigungsorgans ist. Nach dem Einführen des Befestigungsorgans in die Bohrung kann die Nut des Befestigungsorgans durch eine Verschiebung in oder entgegen der Verschieberichtung in den Schlitz eingeführt werden.

Um eine möglichst spielfreie Führung des Befestigungsorgans in den Ausleger zu erreichen, die den Halt der Gleitschutzvorrichtung verbessert und möglicherweise auftretende Vibrationen während der Fahrt verringert, können das Befestigungsorgan und der Ausleger formschlüssig ineinandergreifende Führungsprofile aufweisen. Im einfachsten Fall ist das Führungsprofil des Auslegers lediglich von einem Schlitz mit rechtwinkligen Seitenflächen gebildet, die in eine rechtwinklige Nut des Befestigungsorgans eingeführt sind. Alternativ können zur Verbesserung der Steifigkeit der Führung auch schräge Führungsflächen vorgesehen sein, beispielsweise Führungsflächen, die in Führungsrichtung ein Schwalbenschwanzprofil aufweisen. Das Befestigungsorgan kann auch mit einem Fortsatz ausgestattet sein, der in entsprechende Führungsnuten des Auslegers eingreift.

Gemäß einer weiteren vorteilhaften Ausgestaltung kann das Befestigungsorgan ein sich in Richtung der Radachse erstreckendes Polygonaußenprofil aufweisen. Das Polygonaußenprofil kann als Schnittstelle für ein Werkzeug ausgestaltet sein, beispielsweise mit Abmessungen eines standardisierten Schraubenkopfes, um eine über Drehbewegungen ausgeführte Montage des Befestigungsorgans an der Felge des Fahrzeugrades zu vereinfachen. Beispielsweise kann das Befestigungsorgan als Klemmelement ausgebildet sein, das nach dem Aufsetzen auf den Kopf einer Radschraube durch Verdrehen des mit dem Polygonaußenprofil versehenen Abschnittes reibschlüssig mit dem Kopf der Radschraube verbunden wird. Alternativ kann das Befestigungsorgan als speziell ausgestaltete Radschraube ausgestaltet sein, die ersatzweise für eine herkömmliche Radschraube in das Fahrzeugrad eingesetzt ist. Eine derartige Radschraube kann auch bei nicht montierter Gleitschutzvorrichtung an dem Fahrzeugrad verbleiben, um bei Bedarf eine schnelle und unkomplizierte Montage der Gleitschutzvorrichtung zu ermöglichen.

In einer weiteren vorteilhaften Ausgestaltung kann das Kupplungsorgan über ein elastisch verformbares Stützelement kraftleitend und im Wesentlichen parallel zur Radachse verschiebbar mit dem Ausleger verbunden sein. Während der Fahrt auftretende Vibrationen an der Gleitschutzvorrichtung oder durch seitliche Verschiebungen der Gleitschutzvorrichtung auftretende Stöße können auf diese Weise elastisch gedämpft werden. Das elastisch verformbare Stützelement kann von einem gummielastischen Kunststoff oder einer Stahlfeder gebildet sein. Vorzugsweise ist das elastisch verformbare Stützelement eine als Druckfeder ausgestaltete Schraubenfeder, die auf der dem Fahrzeugrad zugewandten Seite des Auslegers angeordnet ist und das Kupplungsorgan in Richtung des Fahrzeugrades drückt.

Für eine besonders einfache und kostengünstige Ausführung der Befestigungsvorrichtung kann das Kupplungsorgan von einem federgespannten Bolzen gebildet sein, der in einer Öffnung des Auslegers eingesetzt und durch ein Sicherungselement in der Öffnung gehalten ist. Eine derartige Ausgestaltung des Kupplungsorgans ist sehr einfach zu fertigen, einfach zu montieren und dadurch kostengünstig.

Um die Montage der Befestigungsvorrichtung zu vereinfachen, kann der Ausleger einteilig hergestellt sein.

Der Ausleger kann im Sinne einer kostengünstigen Herstellung von einem Stanzblech gebildet sein. Ein Schlitz zur Aufnahme des Befestigungsorgans, eine Öffnung am Ende des Schlitzes zur Einführung des Befestigungsorgans und/oder eine Öffnung zur Aufnahme und Befestigung des Kupplungsorgans können gestanzt sein. Der Verschiebeschlitz und die Einführöffnung sind bevorzugt von einer gestanzten Öffnung geformt. Vorzugsweise kann auch der Einführschlitz zusammen mit der Einführöffnung ausgestanzt sein. Der Ausleger kann somit in einem Fertigungsschritt aus einem Blech gestanzt werden. Auch das Sicherungsorgan kann in einer weiteren vorteilhaften Ausgestaltung in einem Stanzvorgang hergestellt werden, indem das Sicherungsorgan von einem zwischen Einführöffnung und Ausgleichsstrecke angeordneten Abschnitt des Stanzbleches gebildet ist.

Gemäß einer weiteren vorteilhaften Ausgestaltung kann ein Anschlusselement zur Befestigung eines Spannmittels vorgesehen sein, wobei sich der überwiegende Teil des Befestigungsorgans und des Anschlusselements auf der selben Seite des Auflegers von diesem weg erstrecken. Durch diese Anordnung der Bauteile wird eine deutlich kompaktere Bauform der Befestigungsvorrichtung erreicht und der Abstand der Gleitschutzvorrichtung von dem Fahrzeugrad verringert.

Um Drehungen der Gleitschutzvorrichtung gegenüber dem Fahrzeugrad zu ermöglichen, kann auch das Kupplungsorgan drehbar mit dem Ausleger verbunden sein. Um die Anzahl möglicher Bewegungen im Sinne günstiger Herstellkosten und einer einfachen Montage zu verringern, kann das Kupplungsorgan unverschiebbar mit dem Ausleger verbunden sein.

Das Kupplungsorgan kann eine Öffnung oder einen Kanal zur Aufnahme eines Spannmittels, beispielsweise in Form eines Seils, aufweisen, das eine Vorspannung der Gleitschutzvorrichtung auf den Ausleger überträgt. Zur Befestigung des Seils kann dieses an einer Verankerung versehen sein, die in eine entsprechend ausgestaltete Aussparung in dem Kupplungsorgan angeordnet ist.

Um während der Fahrt auftretende Vibrationen oder durch Verschiebungen der Gleitschutzvorrichtung auftretende Stöße zu dämpfen und für eine gleichbleibende Vorspannung zu sorgen, kann das Kupplungsorgan ein Anschlusselement und ein elastisch verformbares Stützelement umfassen, wobei das Anschlusselement entgegen einer von dem Stützelement erzeugten, in Spannrichtung wirkenden Spannkraft auslenkbar ausgestaltet sein kann.

Gemäß einer weiteren vorteilhaften Ausgestaltung einer erfindungsgemäßen Gleitschutzvorrichtung kann das Anschlusselement von einem Bolzen gebildet sein, der in eine Öffnung des Auslegers eingesetzt und durch wenigstens ein Sicherungselement in der Öffnung gehalten ist. Der Bolzen kann durch eine Feder gespannt sein. Eine derartige Ausgestaltung des Anschlusselementes ist sehr einfach zu fertigen, einfach zu montieren und dadurch kostengünstig.

Um eine einfache Kontrolle der Vorspannung der Befestigung einer erfindungsgemäßen Gleitschutzvorrichtung an dem Fahrzeugrad zu ermöglichen, kann das Anschlusselement mit einer gegenüber ihrer wenigstens unmittelbaren Umgebung unterschiedlich ausgestalteten Spannungsmarke versehen sein, die bei einer vorbestimmten, auf das Anschlusselement entgegen der Spannrichtung wirkenden Spannkraft an ein an dem Ausleger angeordnetes Referenzelement angrenzt. In diesem Sinne kann das Anschlusselement zusammen mit dem Stützelement als Federwaage dienen, welche die aufgebrachte Vorspannung an der Felgenanbindung anzeigt.

Zur Erzeugung einer Vorspannung, welche den Halter der Gleitschutzvorrichtung in Richtung des Fahrzeugrades drückt, kann die Gleitschutzvorrichtung eine Spannvorrichtung mit einem wenigstens abschnittsweise zwischen Kupplungsorgan und Halter angeordneten, verkürzbar ausgestalteten Spannmittel umfassen.

Gemäß einer weiteren vorteilhaften Ausgestaltung der erfindungsgemäßen Gleitschutzvorrichtung kann der Ausleger randseitig mit einer Verbreiterung versehen sein. Auf diese Weise wird die Auflagefläche des Auslegers, der bei dem Anlegen der Gleitschutzvorrichtung an das Fahrzeugrad ein Bedienelement darstellt, verbreitert. Der Benutzer kann durch seine Handflächen größere Kräfte übertragen und den Ausleger besser greifen. Die Verbreiterung kann von dem Grundmaterial des Auslegers gebildet sein, auf den Ausleger aufgesteckt oder auf den Ausleger aufgegossen sein. Vorzugsweise ist die Verbreiterung von einem Kunststoffprofil gebildet, das auf den Ausleger aufgegossen ist und diesen im ausgehärteten Zustand umgreift.

In einer weiteren vorteilhaften Ausgestaltung kann der Ausleger mit einer Öffnung und einer Einführöffnung, die in einen Schlitz mündet, versehen sein. Die Einführöffnung kann gegenüber dem Schlitz erweitert und ein Abschnitt des Verschiebeschlitzes als sich zur Öffnung erstreckende Ausgleichsstrecke ausgestaltet sein. Um mit einfachsten Mitteln einen einfach zu montierenden, günstig zu fertigenden und auch im rauen Einsatz zuverlässigen Ausleger zu schaffen, kann vorteilhaft zwischen Ausgleichsstrecke und Einführöffnung ein als Verschiebehindernis ausgestaltetes Sicherungsorgan angeordnet sein.

Gemäß einer weiteren vorteilhaften Ausgestaltung eines erfindungsgemäßen Auslegers kann ein die Einführungsöffnung mit der Ausgleichsstrecke verbindender Einführschlitz das Sicherungsorgan wenigstens teilweise umgeben. Das Sicherungsorgan kann somit starr und unbeweglich an dem Ausleger befestigt sein oder mit weiteren Bestandteilen des Auslegers aus einem Körper geformt sein. Ein in die Einführöffnung eingesetztes Befestigungsorgan kann über den Einführschlitz um das Sicherungsorgan herum in die Ausgleichsstrecke eingeführt werden.

In einer weiteren vorteilhaften Ausgestaltung des Auslegers kann der Einführschlitz im Wesentlichen U-förmig verlaufen, wobei der von dem U-förmigen Einführschlitz umgebene Abschnitt des Auslegers das Sicherungsorgan bildet. Somit ist wenigstens eine Innenfläche des Einführschlitzes quer zum Schlitz angeordnet. Diese Fläche bildet einen Anschlag für ein in den Schlitz aufgenommenes Befestigungsorgan, um eine unbeabsichtigte Verschiebung des Befestigungsorgans aus dem Ausgleichsschlitz in den Einführschlitz zu verhindern. Bevorzugt weist der Bogen des U-förmigen Verlaufs in einer quer zum Einführschlitz verlaufende Richtung, so dass der durch den Einführschlitz gebildete Anschlag ausgehend von der Ausgleichsstrecke bereits am Beginn des Einführschlitzes angeordnet ist.

Um das Befestigungsorgan gegen ein Herausfallen aus der Einführöffnung zu sichern, kann dieses ein sich in eine Einführrichtung erstreckendes Polyogonaußenprofil aufweisen, das wenigstens abschnittsweise in seiner Formgebung und seinen Abmessungen etwa einem Polygoninnenprofil der Einführöffnung entspricht. Das Befestigungsorgan kann somit in Einführrichtung in die Einführöffnung eingesetzt werden, indem das Polygonaußenprofil des Befestigungsorgans nach dem Polygoninnenprofil der Einführöffnung ausgerichtet wird.

Das Polygonaußenprofil des Befestigungsorgans kann einen in den Schlitz des Auslegers einführbar ausgestalteten Führungsschlitz des Befestigungsorgans begrenzen. Wird das Befestigungsorgan nach dem Einführen in die Einführöffnung des Auslegers verdreht, verlagern sich das Polygonaußenprofil des Befestigungsorgans und das Polygoninnenprofil der Einführöffnung zueinander und das Befestigungsorgan kann, auch wenn es in der Einführöffnung angeordnet ist, nicht aus dieser herausfallen. Die Wahrscheinlichkeit eines unbeabsichtigten Lösens der Befestigungsvorrichtung vom Fahrzeugrad ist somit verringert.

In einer weiteren vorteilhaften Ausgestaltung kann der Ausleger, um die Herstellung kostengünstiger zu gestalten, abschnittsweise oder vorzugsweise vollständig aus Kunststoff gefertigt sein.

Für eine weitere Verringerung der Fertigungs- und/oder Montagekosten und um die Handhabbarkeit der Gleitschutzvorrichtung zu verbessern, kann der Ausleger bevorzugt einteilig ausgestaltet sein. Das Sicherungsorgan ist vorzugsweise von einem zwischen Einführöffnung und Ausgleichsstrecke angeordneten Abschnitt des Auslegers gebildet. Das Kupplungsorgan kann bevorzugt in die Öffnung einsetzbar und das Befestigungsorgan in den Schlitz einführbar ausgestaltet sein.

Im Folgenden wird die Erfindung anhand zweier Ausführungsformen mit Bezug auf die Figuren beispielhaft erläutert. Dabei stellen die beschriebenen Ausführungsformen lediglich mögliche Ausgestaltungen dar, die für den jeweiligen Anwendungsfall modifiziert werden können. Einzelne, für sich vorteilhafte Merkmale können gemäß der obigen Beschreibung der vorteilhaften Ausgestaltungen bei der beschriebenen Ausführungsform hinzugefügt oder weggelassen werden.

Es zeigen:
- Fig. 1: eine Teilansicht einer Gleitschutzvorrichtung während des Anlegens an ein Fahr- zeugrad;
- Fig. 2: eine Seitenansicht einer ersten Ausführungsform einer Befestigungsvorrichtung mit einem geschnitten dargestellten Ausleger;
- Fig.3: eine Seitenansicht einer Befestigungsvorrichtung gemäß der Projektionsrichtung III der Fig. 2 mit einem geschnitten dargestellten Ausleger;
- Fig. 4: eine erste Ausführungsform eines Auslegers einer erfindungsgemäßen Befesti- gungsvorrichtung;
- Fig. 5: eine Seitenansicht einer zweiten Ausführungsform einer Befestigungsvorrichtung mit einem geschnitten dargestellten Ausleger;
- Fig. 6: eine zweite Ausführungsform eines Auslegers einer erfindungsgemäßen Befesti- gungsvorrichtung.
- Fig. 7: eine Teilansicht eines zweiten Ausführungsbeispiels einer erfindungsgemäßen Gleitschutzvorrichtung mit einem dritten Ausführungsbeispiel eines erfindungsge- mäßen Auslegers während des Anlegens an ein Fahrzeugrad;
- Fig. 8: eine Seitenansicht einer dritten Ausführungsform einer Befestigungsvorrichtung mit einem geschnitten dargestellten Ausleger;
- Fig. 9: eine Seitenansicht einer Befestigungsvorrichtung gemäß der Projektionsrichtung III- III der Fig. 8 mit einem geschnitten dargestellten Ausleger;
- Fig. 10: eine schematische Draufsicht eines dritten Ausführungsbeispiels eines erfindungs- gemäßen Auslegers;
- Fig. 11: eine schematische Perspektivansicht des dritten Ausführungsbeispiels eines erfin- dungsgemäßen Auslegers;
- Fig. 12: eine schematische Seitenansicht einer vierten Ausführungsform einer erfindungs- gemäßen Befestigungsvorrichtung mit einem geschnitten dargestellten Ausleger.

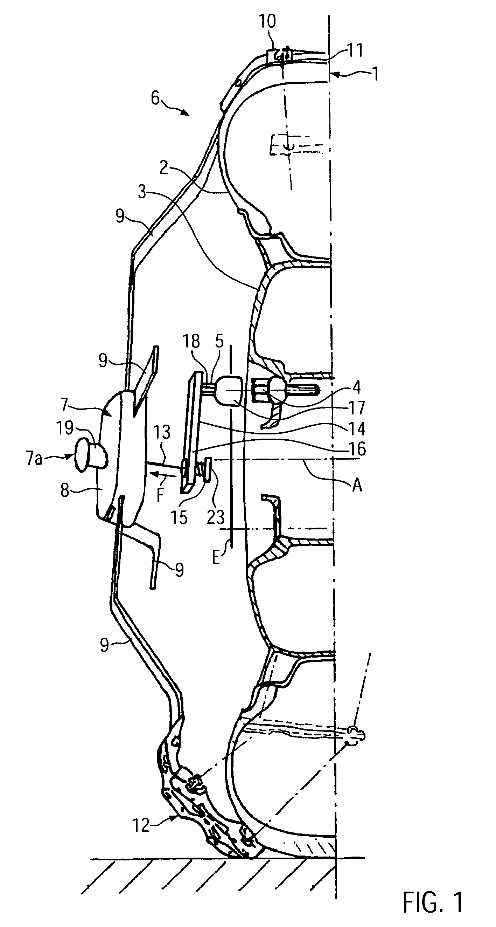

Zunächst wird der Aufbau einer erfindungsgemäßen Gleitschutzvorrichtung mit Bezug auf das Ausführungsbeispiel der Fig. 1 beschrieben.

Ein Fahrzeugrad 1, das einen Reifen 2 und eine Felge 3 umfasst, ist durch Radschrauben 4 um eine Radachse A drehbar an einer hier nicht dargestellten Fahrzeugachse befestigt. Die gezeigte Radschraube 4 ist eine herkömmliche Radschraube, deren Sechskant-förmiger Kopf in einem Befestigungsorgan 5 durch eine Klemmverbindung mit einer Gleitschutzvorrichtung 6 verbunden werden kann. Eine der Radschrauben 4 kann alternativ als Spezialschraube ausgebildet sein, um den Anschluss eines Befestigungsorgans 5 einer auf das Fahrzeugrad 1 aufzuziehenden Gleitschutzvorrichtung 6 zu ermöglichen. Die Gleitschutzvorrichtung 6 ist mit einer im montierten Zustand zentral zum Rad 1 angeordneten Halteeinrichtung 7 versehen. In einer zentralen Halterung 8 der Halteeinrichtung 7 sind vier in Form von Haltearmen 9 ausgestaltete Halter 9 eingesetzt, deren der Halterung 8 abgewandte Enden gelenkig mit Gleitschutzelementen 10 verbunden sind. Die Gleitschutzelemente 10 sind Teile eines die Lauffläche 11 des Reifens 2 bedeckenden Laufnetzes 12.

Das Laufnetz 12 wird bei montierter Gleitschutzvorrichtung durch die Haltearme 9 auf der Lauffläche 11 gehalten, ohne dass weitere Befestigungselemente, wie beispielsweise eine innere Seitenkette, benötigt werden. Um die Haltearme 9 in Richtung des Fahrzeugrades 1 zu drücken und damit den Verbleib des Laufnetzes 12 auf dem Fahrzeugrad 1 sicherzustellen, kann in der Halterung 8 ein zentral angeordnetes Spannmittel 13 vorgesehen sein, das im montierten Zustand die Halterung 8 in Richtung der Felge 3 zieht.

Die Gleitschutzvorrichtung 6 ist in einer Position während der Montage dargestellt. Zur Befestigung der Halterung 8 an der Felge 3 ist diese mit einer Befestigungsvorrichtung 14 verbunden. Die Befestigungsvorrichtung 14 umfasst das Befestigungsorgan 5, ein Kupplungsorgan 15 sowie einen das Kupplungsorgan 15 und das Befestigungsorgan 5 verbindenden Ausleger 16. Der Ausleger 16 ist im montierten Zustand der Gleitschutzvorrichtung 6 in einer quer zur Radachse A verlaufenden Ebene E angeordnet, die aufgrund der Seitenansicht als Linie dargestellt ist.

Das Kupplungsorgan 15 ist als federgespannter Bolzen 15 ausgeführt. Um eine Zentrierung der Halterung 8 gegenüber dem Fahrzeugrad 1 zu ermöglichen, ist das Befestigungsorgan 5 in Richtung der Längserstreckung des Auslegers 16 verschiebbar mit dem Ausleger 16 verbunden. Um Relativbewegungen, insbesondere Drehungen des Laufnetzes 12 gegenüber dem Fahrzeugrad 1 auszugleichen, ist außerdem das Kupplungsorgan 15 in dem Ausleger 16 drehbar gelagert.

Die Halterung 8, das Spannmittel 13, das Kupplungsorgan 15 und der Ausleger 16 sind unverlierbar miteinander verbunden. Das Befestigungsorgan 5 kann hingegen von Hand von dem Ausleger 16 gelöst und vor der Montage der Halterung 8 an dem Fahrzeugrad 1 an dem Kopf einer Radschraube 4 befestigt werden.

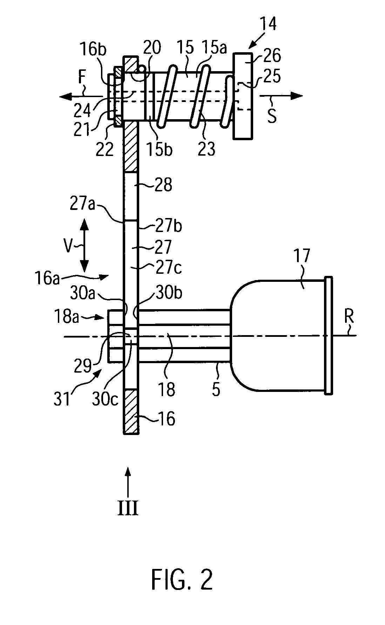

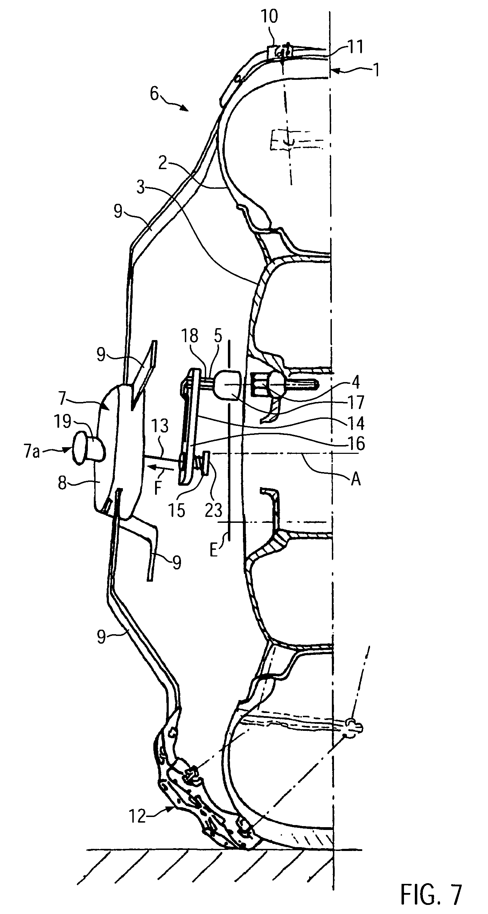

Das Befestigungsorgan 5 umfasst ein Klemmorgan 17, in dessen glockenförmiges Gehäuse der Kopf einer herkömmlichen Sechskantradschraube 4 eingeführt werden kann. Durch Verdrehen eines mit einem Polygonaußenprofil in Form eines Sechskantprofils versehenen Bolzens 18 werden in dem Klemmorgan 17 angeordnete Klemmflächen in Richtung der Außenflächen des Kopfes der Radschraube 4 bewegt, bis eine reibschlüssige Verbindung zwischen dem Kopf der Schraube 4 und dem Klemmorgan 17 entsteht. Alternative Ausgestaltungen des Befestigungsorgans 5 und der ihm zugeordneten Radschraube 4 sind beispielsweise in den Figuren 2 und 7 der EP 0 376 427 A1 gezeigt.

Außerhalb der Bodenaufstandsfläche des Fahrzeugrades 1 ist bereits ein Abschnitt des Laufnetzes 12 aufgelegt, während das Laufnetz 12 im Bereich der Bodenaufstandsfläche noch neben dem Fahrzeugrad 1 zu liegen kommt. Nach dem Verbinden des Befestigungsorgans 5 mit der Radschraube 4 kann der Benutzer über ein Betätigungsorgan 19 das Spannmittel 13 spannen und in einer Spannstellung arretieren. Das in der Halterung 8 angeordnete Betätigungsorgan 19 bildet folglich mit dem Spannmittel 13 eine Spannvorrichtung 7a, wobei der zwischen Kupplungsorgan 15 und Halter 9 angeordnete Abschnitt des Spannmittels 13 über das Betätigungsorgan 19 bei der Montage verkürzt wird. Zum Arretieren des Spannmittels 13 in der Spannstellung, kann beispielsweise ein von einem Bund des Betätigungsorgans 19 gebildeter Anschlag dienen, der während des Spannvorgangs auf einen mit dem Anschlag zusammenwirkenden Gegenanschlag an der Halterung 8 aufgelegt wird. Die Vorspannung des Spannmittels 13 wird durch die Haltearme 9 und durch ein Stützelement 23 sichergestellt, das als Schraubenfeder 23 ausgestaltet ist. Die Haltearme 9 sind bei montierter Gleitschutzvorrichtung 6 durch die von dem Spannmittel 13 übertragene Zugkraft elastisch verformt oder gebogen und erhalten dadurch auch bei Bewegungen der Gleitschutzvorrichtung 6 gegenüber dem Fahrzeugrad 1 die Vorspannung des Spannmittels 13. Damit wird die Halterung 8 permanent in Richtung des Rades 1 gedrückt und das Laufnetz 12 auf der Lauffläche 11 des Reifens gehalten.

Die Schraubenfeder 23 drückt das in dem Ausleger 16 verschieblich angeordnete Kupplungsorgan 15 in Richtung der Felge 3. Indem die Schraubenfeder 23 insbesondere bei ruckartigen Bewegungen oder Vibrationen der Haltearme 9 elastisch nachgibt, werden Bewegungen der Gleitschutzvorrichtung 6 während der Fahrt gedämpft und damit die Laufruhe verbessert.

Sobald die Halterung 8 durch das Klemmorgan 17 mit dem Fahrzeugrad 1 befestigt und das Spannmittel 13 vorgespannt ist, sind keine weiteren Montagetätigkeiten mehr durchzuführen. Beginnt das Fahrzeug zu rollen, wird die Halterung 8 aufgrund der durch das Spannmittel 13 mit einer Vorspannung versehenen Verbindung mit dem Fahrzeugrad 1 fortwährend in Richtung der Felge 3 gezogen und somit auch der zuvor an der Bodenaufstandsfläche des Fahrzeugrades 1 zu liegen gekommene Abschnitt des Laufnetzes 12 auf die Lauffläche des Reifens 2 gezogen.

Fig. 2 ist eine vergrößerte Seitenansicht einer Befestigungsvorrichtung 14 einer erfindungsgemäßen Gleitschutzvorrichtung. Das Kupplungsorgan 15 umfasst ein Anschlusselement 15a, das als zylindrischer Bolzen 15a ausgestaltet ist. Das Anschlusselement 15a ist in eine zylindrische Öffnung 20 des Auslegers 16 eingesetzt. Das Anschlusselement 15a ist mit einer umlaufenden Nut 21 versehen, in der ein Sicherungselement 22 in Form eines Sicherungsrings 22 angeordnet ist, das einen Verlust bzw. ein Lösen des Kupplungsorgans 15 von dem Ausleger 16 verhindert.

Das auf der dem Sicherungselement 22 gegenüberliegenden Seite des Auslegers 16 angeordnete, elastisch verformbare Stützelement 23 stützt das Kupplungsorgan gegen den Ausleger 16 ab. Das Anschlusselement 15a ist in Richtung seiner Längserstreckung oder einer Spannrichtung S in der Öffnung 20 verschiebbar gelagert. Im demontierten Zustand der Gleitschutzvorrichtung 6 hält das Stützelement 23 das Anschlusselement 15a in einer Position, in der das Sicherungselement 22 an dem Ausleger 16 anliegt. Während oder nach der Montage der Gleitschutzvorrichtung wird die in Fig. 1 gezeigte Halterung 8 durch das Spannmittel 13 an das Anschlusselement 15a gezogen. Das Anschlusselement 15a ist dazu mit einem Verankerungsabschnitt 24 in Form eines Kanals 24 versehen, in den das hier nicht dargestellte Spannmittel 13 aufgenommen ist. Das in Spannrichtung S weisende Ende des Kanals 24 mündet in eine Aussparung 25, in die ein an einem Ende des Spannmittels 13 vorgesehene Verankerung eingelegt werden kann. Das Spannmittel 13 kann als Bowdenzug 13 ausgestaltet sein, an dessen Ende eine Verankerung in Form eines Nippels angeordnet ist.

Nach der Montage der Gleitschutzvorrichtung 6 bzw. nach der Befestigung der Halterung 8 an dem Kupplungsabschnitt 24 dämpft das Stützelement 23 Bewegungen des Spannmittels 13. Zusätzlich kann das Stützelement 23 neben den Haltearmen 9 für die notwendige Vorspannung sorgen. Um einen sicheren Sitz der Gleitschutzvorrichtung auf dem Fahrzeugrad zu gewährleisten, ist das Anschlusselement 15a im montierten Zustand der Gleitschutzvorrichtung entgegen der Spannrichtung S verschoben. Damit kann das Anschlusselement 15a bei Bewegungen der Halterung 8 gegenüber dem Fahrzeugrad Ausgleichsbewegungen in Spannrichtung S ausführen, ohne dass die von dem Stützelement 23 aufgebrachte Vorspannung verloren geht. Gleichzeitig dämpft das Stützelement 23 die Bewegung des Kupplungsorgans 15, wodurch die Laufruhe der Gleitschutzvorrichtung 6 deutlich verbessert ist.

Das in Form einer Spiralfeder ausgestaltete Stützelement 23 liegt an dem Ausleger 16 auf der die Öffnung 20 umgebenden Fläche auf. Zur Einleitung der erzeugten Stützkraft in das Anschlusselement 15a ist dieses mit einem Absatz 26 versehen, an dem das von dem Ausleger 16 weg weisende Ende des Stützelementes 23 aufliegt. Das bolzen- oder zylinderförmige Anschlusselement 15a bildet außerdem eine Führung für das als Schraubenfeder ausgestaltete Stützelement 23, welches das Anschlusselement 15a in dem Abschnitt zwischen Ausleger 16 und Absatz 26 umwindet.

An dem Anschlusselement 15a ist eine von ihrer unmittelbaren Umgebung unterschiedlich ausgestaltete Spannungsmarke 15b vorgesehen. Die Spannungsmarke 15b kann eine Vertiefung und/oder eine farbige Markierung sein. Wird das Anschlusselement 15a aufgrund einer durch das Stützelement 23 übertragenen Spannkraft F entgegen der Spannrichtung S verschoben, zeigt die Spannungsmarke 15b an, ob eine ausreichend große Spannkraft F für einen sicheren Halt der Gleitschutzvorrichtung 6 auf dem Fahrzeugrad 1 erreicht ist. Die Kante 16b auf der von dem Fahrzeugrad weg, d.h. entgegen der Spannrichtung S weisenden Seite der Öffnung 20, dient dabei als Referenzelement 16b. Sobald die Spannungsmarke 15b an das Referenzelement 16b angrenzt oder über das Referenzelement 16b hinaus verschoben ist, ist die Spannungsmarke 15b auf der von dem Fahrzeugrad 1 weg weisenden Seite des Auslegers 16 sichtbar.

Der Ausleger 16 ist mit einem in Verschieberichtung V verlaufenden Schlitz 27 versehen, der an seinem in Richtung des Kupplungsorgans 15 weisenden Ende in eine Einführöffnung 28 mündet. Der Außendurchmesser der Einführöffnung 28 ist etwas größer als der Außendurchmesser des Bolzens 18 des Befestigungsorgans 5, so dass dieser problemlos in die Einführöffnung 28 eingesetzt werden kann. Die Breite des Schlitzes 27 ist hingegen deutlich kleiner als der größere Außendurchmesser des Bolzens 18.

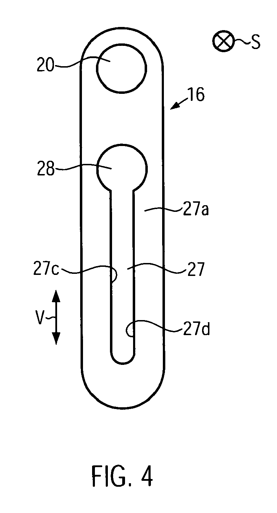

Die den Schlitz 27 begrenzende Führungsfläche 27c führt mit der ihr gegenüberliegenden (in Fig. 4 gezeigten) Führungsfläche 27d das Befestigungsorgan 5 in oder entgegen der Verschieberichtung V. Auf seiner den Haltearmen zugewandten Seite und seiner dem Fahrzeugrad zugewandten Seite ist der Ausleger 16 mit Führungsflächen 27a und 27b zur versehen, die das Befestigungsorgan 5 gegen ein Verkippen stützen. Der Schlitz 27 bildet mit den Flächen 27a, 27b, 27c, 27d ein Führungsorgan 16a, durch das der Ausleger 16 in Verschieberichtung V verschiebbar und um die im Wesentlichen parallel zur in Fig. 1 gezeigten Radachse A verlaufende Rotationsachse R relativ zum Befestigungsorgan 5 drehbar geführt ist.

Der Bolzen 18 ist in einer Projektionsrichtung, die der Richtung der Rotationsachse R entspricht, mit einem Polygonaußenprofil 18a versehen, das in seinen Abmessungen vorzugsweise dem Profil des Kopfes einer standardisierten Schraube entspricht. Um das Befestigungsorgan 5 in oder entgegen der Verschieberichtung V in dem Schlitz 27 verschieben zu können, weist der Bolzen 18 eine als umlaufende Nut 29 ausgestaltete Schmalstelle 29 auf, deren Außendurchmesser etwa der Breite des Schlitzes 27 entspricht. Damit kann die Position des Auslegers 16 oder des Kupplungsorgans 15 an unterschiedliche Lochkreisdurchmesser der Radschrauben 4 angepasst werden.

Die Schmalstelle 29 ist beidseits von breiteren oder dickeren Abschnitten des Bolzens begrenzt, die an ihren dem Ausleger 16 zugewandten Seiten Gegenflächen 30a, 30b bilden. Auch der Umfang der Schmalstelle 29 bildet eine Gegenfläche 30c. Die Führungsflächen des Auslegers 27a, 27b, 27c, 27d bilden zusammen mit den Gegenflächen des 30a, 30b, 30c des Befestigungsorgans 5 eine gelenkige Verbindung des Auslegers 16 mit dem Befestigungsorgan 5. Das Befestigungsorgan 5 ist in die Führungsflächen 27a, 27b, 27c, 27d des Auslegers einlegbar, d.h. die gelenkige Verbindung kann durch einfaches Ein- oder Auflegen der Gegenflächen 30a, 30b des Befestigungsorgans 5 in oder auf die Führungsflächen 27a, 27b, 27c, 27d hergestellt werden.

Der Bolzen 18 liegt mit den Gegenflächen 30a, 30b an den den Schlitz 27 umgebenden Führungsflächen 27a, 27b des Auslegers 16 an und stützt sich somit gegen ein seitliches Verkippen des Befestigungsorgans 5 ab. Das von den Gegenflächen 30a, 30b, 30c des Befestigungsorgans 5 in einer Projektionsrichtung, die der Verschieberichtung V entspricht, gebildete Profil entspricht folglich dem durch die Führungsflächen 27a, 27b, 27c, 27d in der gleichen Projektionsrichtung gebildeten Profil. Die Schmalstelle 29 kann als umlaufende Nut 29 ausgestaltet sein, die eine Drehung des Bolzens 18 um eine Rotationsachse R, die einer Symmetrieachse des Bolzens 18 entsprechen kann, gestattet, und auf diese Weise eine Drehbewegung des Kupplungsorgans 15 um das Befestigungsorgan 5 ermöglicht. Die Ausrichtung des Kupplungsorgans 15 nach der Radachse A ist damit vereinfacht. Die selbsttätige Zentrierung des Laufnetzes 12 der Gleitschutzvorrichtung hinsichtlich des Fahrzeugrades 1 während der Fahrt wird verbessert.

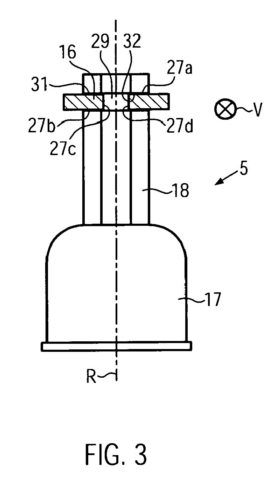

Fig. 3 ist eine Seitenansicht der beispielhaften Ausführungsform der Befestigungsvorrichtung in einer Projektionsrichtung, die der Verschieberichtung V entspricht. In der gezeigten Projektionsrichtung bildet die Schmalstelle 29 des Befestigungsorgans 5 ein Führungsprofil 32, in das ein von den Führungsflächen 27a, 27b, 27c, 27d des Auslegers 16 gebildetes Führungsprofil 33 eingreift.

Fig. 4 ist eine Draufsicht auf einen Ausleger 16 einer erfindungsgemäßen Gleitschutzvorrichtung. Die Öffnung 20, die zur Aufnahme des bolzenförmigen Kupplungsorgans 15 dient, weist einen etwas größeren Durchmesser als der Außendurchmesser des Bolzens 18 auf, um eine leichte Verschiebbarkeit des Bolzens 18 in oder entgegen der Spannrichtung S zu gestatten. Der Innendurchmesser der Einführöffnung 28 ist etwas größer als der Außendurchmesser des in Fig. 2 gezeigten Bolzens 18, um dessen einfache Montage zu ermöglichen.

Der Schlitz 27 mündet an seinem der Öffnung 20 zugewandten Ende in die Einführöffnung 28. Das von der Öffnung 20 weg weisende Ende ist hingegen verschlossen. Alternativ oder zusätzlich kann der Schlitz 27 eine Öffnung aufweisen, die quer zur Spannrichtung S verläuft, um die Montage des Auslegers 16 an dem Befestigungsorgan 5 zu vereinfachen. Beispielsweise kann das von der Öffnung 20 weg weisende Ende des Schlitzes 27 mit einer in Verschieberichtung V weisenden Öffnung versehen sein, so dass das Ende des Auslegers 16 gabelförmig gestaltet ist.

Alternativ zu dem in Fig. 4 gezeigten kreisrunden Profil der Einführöffnung 28 kann auch ein polygones Profil vorgesehen sein, das dem Polygonaußenprofil 18a des Bolzens 18 entspricht. Wird der Bolzen nach dem Einsetzen in die Einführöffnung 28 gegenüber dem Ausleger 16 verdreht, entsteht aufgrund der sich überlagernden Profile von Bolzen 18 und Einführöffnung 28 eine zusätzliche Verliersicherung, welche die Wahrscheinlichkeit eines ungewollten Herausfallens des Bolzens aus dem Schlitz 27 verringert. Zusätzlich kann der Ausleger 16 mit einem polygonen Profil an der Einführöffnung 28 als Werkzeug verwendet werden, um durch ein Verdrehen des Bolzens 18 das Klemmorgan 17 mit der zugeordneten Radschraube zu verbinden.

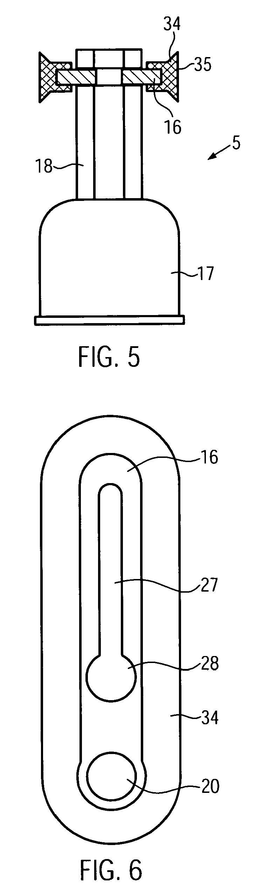

Fig. 5 ist eine Seitenansicht einer zweiten Ausführungsform der Befestigungsvorrichtung, wobei für Elemente, die in Funktion und Aufbau den Elementen des Ausführungsbeispiels der Fig. 3 entsprechen, dieselben Bezugszeichen verwendet werden. Der Kürze halber wird auf die Unterschiede zum Ausführungsbeispiel der Fig. 3 eingegangen.

Der Ausleger 16 ist randseitig mit einer Verbreiterung 34 versehen. Die Verbreiterung 34 ist aus Kunststoff geformt und um den Rand des plattenförmigen Auslegers 16 mit diesem vergossen. Die Verbreiterung 34 vergrößert insbesondere die seitliche Umfangsfläche 35, die bei dem Anlegen der Gleitschutzvorrichtung an das Fahrzeugrad als Auflage oder Grifffläche für den Benutzer dient. Die haptischen Eigenschaften des Auslegers 16 sind auf diese Weise deutlich verbessert. Scharfe Kanten an dem Rand des Auslegers 16, die beispielsweise bei einem Stanzen des Auslegers 16 aus einem Blech entstehen können, werden durch die Verbreiterung 34 abgedeckt.

Fig. 6 ist eine Draufsicht auf den Ausleger der Fig. 5. Die Verbreiterung 34 ist von einem geschlossenen Kunststoffprofil gebildet, welches den Ausleger 16 an seinem gesamten Umfang umgibt. Der Schlitz 27, die Einführöffnung 28 und die Öffnung 20 des Auslegers 16 sind durch das umlaufende Kunststoffprofil 34 nicht bedeckt, so dass die einwandfreie Funktion des Auslegers 16 gewährleistet bleibt. Auch die die Öffnung 20 umgebende Auflagefläche, auf welcher das in Fig. 2 gezeigte Sicherungselement 22 oder das Stützelement 23 aufliegt, ist durch die Verbreiterung 34 nicht verdeckt.

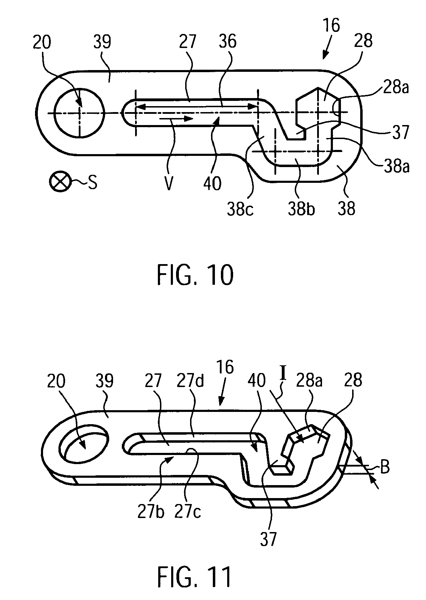

Fig. 7 ist ein zweites Ausführungsbeispiel einer erfindungsgemäßen Gleitschutzvorrichtung, wobei für Elemente, die in Funktion und Aufbau den Elementen des Ausführungsbeispiels der Figur 1 entsprechen, dieselben Bezugszeichen verwendet werden. Der Kürze halber wird auf die Unterschiede zum Ausführungsbeispiel der Figur 1 eingegangen. Der in Fig. 10 und Fig. 11 detaillierte gezeigte Ausleger 16 ist mit einer Öffnung 20 für das Kupplungsorgan 15 und einer Einführöffnung 28 für das Befestigungsorgan 5 versehen. Die Einführöffnung 28 mündet in einen als Verschiebeschlitz ausgestalteten Schlitz 27 und ist gegenüber dem Schlitz 27 erweitert. Ein Abschnitt des Schlitzes 27 ist als sich zur Öffnung 20 erstreckende Ausgleichsstrecke 36 ausgestaltet, wobei zwischen Ausgleichsstrecke und Einführöffnung ein als Verschiebehindernis ausgestaltetes Sicherungsorgan 37 angeordnet ist. Somit ist die Gefahr eines unbeabsichtigten Lösens der Gleitschutzvorrichtung 6 von dem Fahrzeugrad 1 verringert.

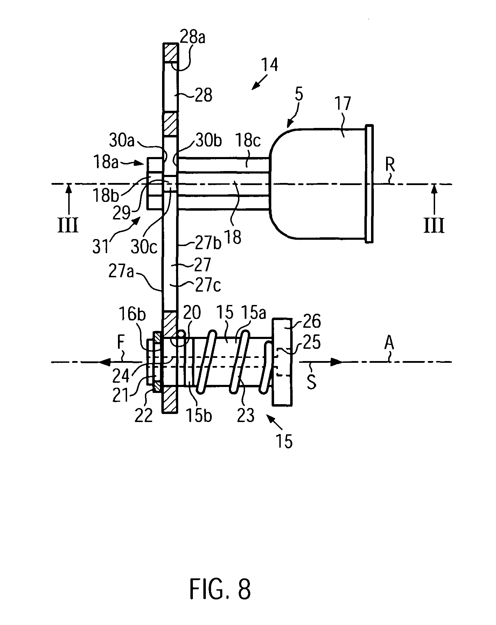

Fig. 8 ist eine vergrößerte Seitenansicht einer Befestigungsvorrichtung 14 einer erfindungsgemäßen Gleitschutzvorrichtung, wobei für Elemente, die in Funktion und Aufbau den Elementen des Ausführungsbeispiels der Figur 2 entsprechen, dieselben Bezugszeichen verwendet werden. Der Kürze halber wird auf die Unterschiede zum Ausführungsbeispiel der Figur 2 eingegangen.

Der Bolzen 18 ist in einer Projektionsrichtung, die der Richtung der Rotationsachse R entspricht, mit einem Polygonaußenprofil 18a versehen, das in seinen Abmessungen vorzugsweise dem Profil des Kopfes einer standardisierten Schraube entspricht. Das Polygonaußenprofil 18a des Bolzens 18 ist derart ausgestaltet, dass es wenigstens abschnittsweise einem Polygoninnenprofil 28a der Einführöffnung 28 entspricht und somit in diese eingeführt werden kann. Die Abmessungen des Polygonaußenprofils 18a, beispielsweise der Durchmesser und/oder wenigstens eine Seitenlänge des Polygonaußenprofils 18a, entsprechen etwa oder sind etwas größer als die entsprechenden Abmessungen des Polygoninnenprofils 28a.

Die Schmalstelle 29 ist zu einer Seite in Richtung der Radachse A durch von einem Halteabschnitt 18b und zur gegenüberliegenden Seite in Richtung der Radachse A durch einen Verbindungsabschnitt 18c begrenzt. Die Schmalstelle 29 bildet zusammen mit dem Halteabschnitt 18b und dem Verbindungsabschnitt 18c eine Führung, durch welche die Position des Auslegers 16 oder des Kupplungsorgans 15 an unterschiedliche Lochkreisdurchmesser der Radschrauben 4 angepasst werden können. Der Ausleger 16 umfasst somit ein Führungsorgan, durch das er in wenigstens eine Verschieberichtung V relativ zum Befestigungsorgan 5 verschiebbar und um wenigstens eine im Wesentlichen parallel zur Radachse A verlaufende Rotationsachse R relativ zum Befestigungsorgan 5 drehbar geführt ist. Der Halteabschnitt 18b und der Verbindungsabschnitt 18c bilden an ihren dem Ausleger 16 zugewandten Seiten Gegenflächen 30a, 30b. Der Umfang der Schmalstelle 29 bildet eine Gegenfläche 30c.

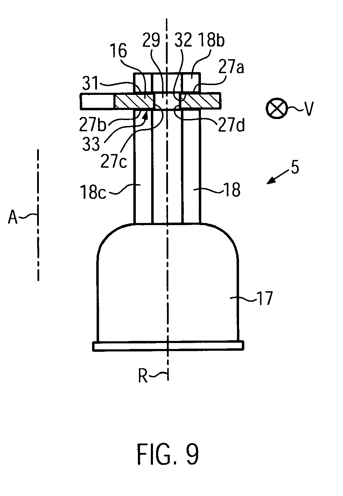

Fig. 9 ist eine Seitenansicht des dritten Ausführungsbeispiels der Befestigungsvorrichtung in einer Projektionsrichtung, die der Verschieberichtung V entspricht. Der Bolzen 18 des Befestigungsorgans 5 bildet ein Führungsprofil 32, in das ein von den Führungsflächen 27a, 27b, 27c, 27d des Auslegers 16 gebildetes Führungsprofil 33 eingreift.

Das Führungsprofil 32 des Befestigungsorgans 5 umfasst die Schmalstelle 29, einen Halteabschnitt 18b und einen Verbindungsabschnitt 18c, die jeweils von dem Bolzen 18 gebildet sind. Während die Schmalstelle 29 für eine seitliche Führung des Auslegers 16 gegenüber dem Befestigungsorgan 5 sorgt, dienen der Halteabschnitt 18b und der Verbindungsabschnitt 18c einer Bewegung des Auslegers 16 in Richtung der Fahrzeugachse A.

Fig. 10 ist eine schematische Draufsicht auf ein drittes Ausführungsbeispiel eines erfindungsgemäßen Auslegers.

Das von der Öffnung 20 weg weisende Ende ist hingegen verschlossen. Die Einführöffnung 28 ist mit einem polygonen Innenprofil 28a versehen, das abschnittsweise dem Polygonaußenprofil 18a des Bolzens 18 entspricht. Das Polygoninnenprofil 28a ist lediglich durch den in die Einführöffnung 28 mündenden Abschnitt 38a des Einführschlitzes 38 unterbrochen. Wird der Bolzen nach dem Einsetzen in die Einführöffnung 28 gegenüber dem Ausleger 16 verdreht, entsteht aufgrund der sich überlagernden Profile von Bolzen 18 und Einführöffnung 28 eine zusätzliche Verliersicherung, welche die Wahrscheinlichkeit eines ungewollten Herausfallens des Bolzens aus dem Schlitz 27 verringert. Zusätzlich kann der Ausleger 16 aufgrund des polygonen Profils an der Einführöffnung 28 als Werkzeug verwendet werden, um durch ein Verdrehen des Bolzens 18 das Klemmorgan 17 mit der zugeordneten Radschraube zu verbinden.

Die Abmessungen des Polygoninnenprofils 28a der Einführöffnung 28 entsprechen etwa den Abmessungen des Polygonaußenprofils 18a des Bolzens 18, so dass ein in Fig. 2 und Fig. 3 gezeigter Halteabschnitt 18b des Bolzens 18 in die Einführöffnung 28 eingeschoben werden kann. Nach dem Einsetzen des Bolzens 18 in den Ausleger 16 kann der Bolzen 18 verdreht werden, so dass sich die Polygonprofile 18a und 28a des Bozens 18 und der Öffnung 28 überschneiden und ein Herausrutschen des Bolzens 18 aus der Einführöffnung 28 verhindert ist. Ein Verschieben des Bolzens 18 innerhalb des Verschiebeschlitzes 27 ist hingegen aufgrund der in Fig. 3 gezeigten Schmalstelle 29 des Bolzens 18 auch bei verdrehtem Bolzen 18 möglich.

Der Verschiebeschlitz 27 weist eine Ausgleichsstrecke 36 auf, entlang derer der Ausleger 16 in einem montierten Zustand der Gleitschutzvorrichtung verschiebbar ist. Der Abschnitt des Verschiebeschlitzes 27, der die Ausgleichsstrecke 36 bildet, ist in eine Verschieberichtung V durch ein Sicherungsorgan 37 begrenzt.

Bei einer Verschiebung des Auslegers 16 gegenüber dem hier nicht gezeigten Befestigungsorgan entgegen der Verschieberichtung V stößt das Befestigungsorgan an dem Ende der Ausgleichsstrecke 36 an das Sicherungsorgan 37. Das Sicherungsorgan 37 bildet somit ein Hindernis, das ein Verrutschen des Befestigungsorgans in Richtung der Einführöffnung 28 behindert und die Gefahr eines Lösens der Verbindung zwischen Ausleger 16 und Befestigungsorgan verringert.

Der Abschnitt des Verschiebeschlitzes 27, der die Ausgleichsstrecke 36 bildet, ist durch einen Einführschlitz 38 mit der Einführöffnung 28 verbunden. Der Einführschlitz 28 verläuft ausgehend von der Einführöffnung 28 quer zur Verschieberichtung V und zur Ausgleichsstrecke 36. Ein sich anschließender, parallel zur Ausgleichsstrecke 36 verlaufender Abschnitt 38b des Einführschlitzes 38 verbindet den in die Einführöffnung 28 mündenden Abschnitt 38a des Einführschlitzes 38 mit einem in die Ausgleichsstrecke 36 mündenden Abschnitt 38c des Einführschlitzes 38. Der Abschnitt 38c des Einführschlitzes 38 verläuft schräg zur Ausgleichsstrecke 36, wobei der Schrägungswinkel gegenüber der Ausgleichsstrecke > 45° und vorzugsweise > 65° ist. Die Breite des Verschiebeschlitzes 27 ist im Bereich des Einführschlitzes 38 genauso groß wie im Bereich der Ausgleichsstrecke 36, so dass das Befestigungsorgan in Richtung des jeweiligen Abschnittes 38a, 38b, 38c problemlos innerhalb des Verschiebeschlitzes verschoben werden kann.

Die Einführöffnung ist an einem der Öffnung 20 gegenüberliegenden Ende des Auslegers 16 angeordnet. Alternativ kann die Einführöffnung auch an einem der Öffnung 20 zugeordneten Ende des Verschiebeschlitzes 27 angeordnet werden.

Der Ausleger 16 ist von einem aus einem Blech gestanzten Stanzblech 39 gebildet. Die Einführöffnung 28, der Verschiebeschlitz 27 und der Einführschlitz 38 sind von einer gemeinsamen gestanzten Öffnung 40 gebildet, während die Öffnung 20 von einer weiteren, mit einem geschlossenen Rand versehenen gestanzten Öffnung gebildet ist. Der Ausleger 16 ist einteilig ausgestaltet, wobei das Sicherungsorgan 37 von einem zwischen Einführöffnung 28 und Ausgleichsstrecke 36 angeordneten Abschnitt des Stanzbleches 39 des Auslegers 16 gebildet ist.

Der die Einführöffnung 28 mit der Ausgleichsstrecke 36 verbindende Einführschlitz 38 umgibt das Sicherungsorgan 37 wenigstens teilweise. Der Einführschlitz 38 verläuft im Wesentlichen U-förmig, wobei der von dem U-förmigen Einführschlitz 38 umgebene Abschnitt des Auslegers 16 das Sicherungsorgan 37 bildet. Der Ausleger 16 ist vorzugsweise von einem Stanzblech 39 und der Verschiebeschlitz 27 und die Einführöffnung 28 von einer gestanzten Öffnung 40 gebildet.Fig. 11 ist eine schematische Perspektivansicht des dritten Ausführungsbeispiels des erfindungsgemäßen Auslegers. Die nach innen weisenden, das Polygoninnenprofil 28a bildenden Flächen der Einführöffnung 28 verlaufen parallel zu einer Einführrichtung I, in welcher der Bolzen 18 einsetzbar ist.

Der Ausleger 16 weist über ihre gesamte Länge eine gleichbleibende Breite B auf. Der Ausleger 16 kann somit aus einem einfachen Blech gleichbleibender Dicke gestanzt werden.

Die oben beschriebene Ausführungsform eines erfindungsgemäßen Auslegers 16 kann im Sinne der Erfindung variiert oder weiter verbessert werden. So kann der Verschiebeschlitz 27 in einer weiteren Ausführungsform des erfindungsgemäßen Auslegers alternativ durch ein Führungsorgan ersetzt werden, das von einem Steg oder einer Rippe gebildet ist. Das Sicherungsorgan kann auch von einem federbelasteten Element, beispielsweise einem in die Ausgleichsstrecke ragenden federbetätigtem Hebel gebildet sein, der bei Überschreiten einer vorbestimmten Betätigungskraft elastisch auslenkbar ist. Des Weiteren sind als Sicherungsorgane auch elastomere Körper denkbar, die beispielsweise in die Verschiebestrecke oder den Einführschlitz ragen und somit ein unbeabsichtigtes Herausrutschen des Befestigungsorgans verhindern.

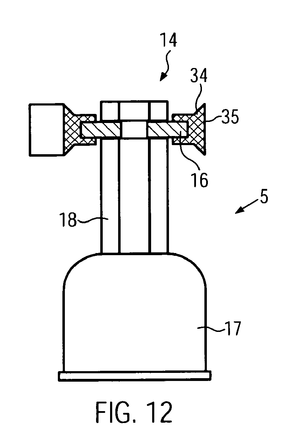

Fig. 12 ist eine Seitenansicht eines vierten Ausführungsbeispiels der Befestigungsvorrichtung 14, deren Perspektive der Perspektive der Fig. 3 entspricht, wobei für Elemente, die in Funktion und Aufbau den Elementen des Ausführungsbeispiels der Fig. 3 entsprechen, dieselben Bezugszeichen verwendet werden. Der Kürze halber wird auf die Unterschiede zum Ausführungsbeispiel der Fig. 3 eingegangen.

Der Ausleger 16 ist randseitig mit einer Verbreiterung 34 versehen. Die Verbreiterung 34 ist vorzugsweise aus Kunststoff geformt und mit dem Rand des Auslegers 16 vergossen. Die Verbreiterung 34 weist eine gegenüber dem Ausleger 16 verbreiterte Umfangsfläche 35 auf, die bei dem Anlegen der Gleitschutzvorrichtung an das Fahrzeugrad als Auflage oder Grifffläche für den Benutzer dient. Der Ausleger 16 lässt sich somit bei der Montage deutlich besser greifen. Scharfe Kanten und Grate an dem Rand des Auslegers 16, die beispielsweise beim Stanzen entstehen können, werden durch die Verbreiterung 34 abgedeckt.

## Patentansprüche

1. Befestigungsvorrichtung (14) zur Befestigung einer Gleitschutzvorrichtung (6) für Fahrzeugräder (1), mit einem am Fahrzeugrad (1) befestigbaren Befestigungsorgan (5), das durch einen im Wesentlichen in einer quer zu einer Radachse (A) verlaufenden Ebene (E) liegenden Ausleger (16) mit einem Kupplungsorgan (15) verbunden ist, **dadurch gekennzeichnet, dass** der Ausleger (16) ein Führungsorgan (16a) umfasst, durch das er in wenigstens eine Verschieberichtung (V) verschiebbar und um wenigstens eine im Wesentlichen parallel zur Radachse (A) verlaufende Rotationsachse (R) relativ zum Befestigungsorgan (5) drehbar geführt ist.

2. Befestigungsvorrichtung (14) nach Anspruch 1, **dadurch gekennzeichnet, dass** das Führungsorgan (16a) von sich in Längsrichtung des Auslegers (16) erstreckenden Führungsflächen (27a, 27b, 27c, 27d) des Auslegers (16) gebildet ist, zwischen denen wenigstens abschnittsweise an Gegenflächen (30a, 30b, 30c) des Befestigungsorgans (5) anliegen.

3. Befestigungsvorrichtung (14) nach Anspruch 1 oder 2, **dadurch gekennzeichnet, dass** der Ausleger (16) einen in Verschieberichtung (V) verlaufenden Schlitz (27) aufweist, in dem das Befestigungsorgan (5) formschlüssig geführt ist.

4. Befestigungsvorrichtung (14) nach Anspruch 3, **dadurch gekennzeichnet, dass** der Schlitz (27) an einem Ende in eine Einführöffnung (28) mündet, in die das Befestigungsorgan (5) wiederholt einsetzbar ist.

5. Befestigungsvorrichtung (14) nach einem der Ansprüche 1 bis 4, **dadurch gekennzeichnet, dass** das Befestigungsorgan (5) und der Ausleger (16) formschlüssig ineinander greifende Führungsprofile (32,33) aufweisen.

6. Befestigungsvorrichtung (14) nach einem der Ansprüche 1 bis 5, **dadurch gekennzeichnet, dass** das Befestigungsorgan (5) ein sich in Richtung der Radachse (A) erstreckendes Polygonaußenprofil (18a) aufweist.

7. Befestigungsvorrichtung (14) nach einem der Ansprüche 1 bis 6, **dadurch gekennzeichnet, dass** der Ausleger (16) von einem Stanzblech gebildet ist.

8. Befestigungsvorrichtung (14) nach einem der Ansprüche 1 bis 7, **dadurch gekennzeichnet, dass** ein Anschlusselement (15a) zur Befestigung eines Spannmittels (13) vorgesehen ist, und dass sich der überwiegende Teil des Befestigungsorgans (5) und des Anschlusselements (15a) auf der selben Seite des Auflegers (16) von diesem weg erstrecken.

9. Gleitschutzvorrichtung (6) für Fahrzeugräder (1), die eine Halteeinrichtung (7) mit wenigstens einem Halter (9) und eine Befestigungsvorrichtung (14) umfasst, wobei die Befestigungsvorrichtung (14) ein am Fahrzeugrad (1) befestigbares Befestigungsorgan (5) aufweist, das durch einen im Wesentlichen quer zu einer Radachse verlaufenden Ausleger (16) mit einem mit dem Halter (9) verbindbaren Kupplungsorgan (15) verbunden ist, **dadurch gekennzeichnet, dass** die Befestigungsvorrichtung (14) nach einem der Ansprüche 1 bis 8 ausgestaltet ist.

10. Gleitschutzvorrichtung (6) nach Anspruch 9, **dadurch gekennzeichnet, dass** das Kupplungsorgan (15) ein Anschlusselement (15a) und ein elastisch verformbares Stützelement (23) umfasst, wobei das Anschlusselement (15a) entgegen einer von dem Stützelement (23) erzeugten, in Spannrichtung (S) wirkenden Spannkraft (F) auslenkbar ausgestaltet ist.

11. Gleitschutzvorrichtung (6) nach Anspruch 9 oder 10, **dadurch gekennzeichnet, dass** das Anschlusselement (15a) von einem Bolzen (15a) gebildet ist, der in eine Öffnung (20) des Auslegers (16) eingesetzt und durch wenigstens ein Sicherungselement (22) in der Öffnung (20) gehalten ist.

12. Gleitschutzvorrichtung (6) nach einem der Ansprüche 9 bis 11, **dadurch gekennzeichnet, dass** das Anschlusselement (15a) mit einer gegenüber ihrer wenigstens unmittelbaren Umgebung unterschiedlich ausgestalteten Spannungsmarke (15b) versehen ist, die bei einer vorbestimmten, auf das Anschlusselement (15a) entgegen der Spannrichtung (S) wirkenden Spannkraft (F) an ein an dem Ausleger (16) angeordnetes Referenzelement (16b) angrenzt.

13. Gleitschutzvorrichtung (6) nach einem der Ansprüche 9 bis 12, **dadurch gekennzeichnet, dass** die Gleitschutzvorrichtung (6) eine Spannvorrichtung (7a) mit einem wenigstens abschnittsweise zwischen Kupplungsorgan (15) und Halter (9) angeordneten, verkürzbar ausgestalteten Spannmittel (13) umfasst.

14. Ausleger (16) für Gleitschutzvorrichtungen (6), mit einer Öffnung (20) und einer Einführöffnung (28), die in einen Verschiebeschlitz (27) mündet, wobei die Einführöffnung (28) gegenüber dem Verschiebeschlitz (27) erweitert ist und ein Abschnitt des Verschiebeschlitzes (27) als sich zur Öffnung (20) erstreckende Ausgleichsstrecke (36) ausgestaltet ist, **dadurch gekennzeichnet, dass** zwischen Ausgleichsstrecke (36) und Einführöffnung (28) ein als Verschiebehindernis ausgestaltetes Sicherungsorgan (37) angeordnet ist.

15. Ausleger (16) nach Anspruch 14, **dadurch gekennzeichnet, dass** ein die Einführöffnung (28) mit der Ausgleichsstrecke (36) verbindender Einführschlitz (38) das Sicherungsorgan (37) wenigstens teilweise umgibt.
